# EUROPEAN PATENT APPLICATION

(11) **EP 4 286 260 A1**
(43) Date of publication of application: **06.12.2023**
(21) Application number: 22382534.0
(22) Date of filing: 01.06.2022
(51) Int. Cl.: B62J 43/30, B62J 43/23, B62M 9/132, B62M 9/122, B62M 25/08, B62J 11/19, B62K 23/06, B62K 21/12

(54) **DERAILLEUR GROUPSET FOR BICYCLE AND BICYCLE COMPRISING THE DERAILLEUR GROUPSET**

(71) Applicant: ZUMA Innovation, S.L., 48960 Galdakao (ES)
(72) Inventor: Zubieta Andueza, Mikel, Galdakao (BIZKAIA) (ES); Madariaga Landajo, Jon, Galdakao (BIZKAIA) (ES)
(74) Representative: Balder IP Law, S.L.

(57) **Abstract**

Derailleur groupset (1) comprising a rear derailleur unit (2) and a shift control unit (3), at least a first power supply (B1) and a second power supply (B2), the power supplies being (B1, B2) equal and interchangeable, a first power supply (B1) being removably mounted on the rear derailleur unit (2), wherein the second power supply (B2) is removably mounted on the shift control unit (3). The invention also relates to a bicycle comprising the derailleur groupset.

## Description

### TECHNICAL FIELD

The present invention falls within the field of electronic gear shifting systems for bicycles.

### BACKGROUND

In recent years, the bicycle has suffered a transformation from being a purely mechanical element to being an element that incorporates more and more electronic systems (lights, cyclocomputers, electronic shifters, powermeters, electric motors,...). These electronic systems are usually powered by rechargeable batteries and/or by disposable batteries.

In the case of electronic gear shifting systems for bicycles, the first developments consider a single, centralized power supply system. For example:
In patent US5480356, Campagnolo shows an electronic gear shifting systems for bicycles.

In patent US7886947, Campagnolo shows a battery for an electronic gear shifting systems for bicycles that is fixedly mounted on the bottle cage of the bicycle.

In patent US20070003828A1, Campagnolo shows an integrated electronic control system for bicycles in which several batteries can be removably mounted.

Subsequently, with the development of wireless communications, distributed electronic system solutions have been proposed, each of these electronic systems having its individual power supply or battery system. For example:
In patent EP1818253B1, Shimano shows an electronic derailleur for bicycles.

In patent EP1752373B1, Shimano shows a battery for an electronic derailleur for bicycles fixedly mounted on the front derailleur.

In patent EP2112060B1, Shimano shows a battery for an electronic derailleur for bicycles removably mounted on the front derailleur.

In patent US11077917B2, Tektro shows a shift control unit for an electronic gear shifting system for bicycles in which the battery is located at one of the ends of the handlebar.

In patent EP3725660A1, Sram shows a battery for an electronic derailleur for bicycles removably mounted on the rear derailleur.

An interesting idea that arises as a result of having more than one battery on a bicycle is the fact of being able to interchange these batteries between some devices with similar characteristics.

For example, in patent EP2982593, Sram shows a power supply arrangement for an electronic gear shifting system for bicycles, comprising two equal and interchangeable powersupplies removably mounted on the front derailleur and on the rear derailleur. While for the shift controls, which have a much lower energy consumption than the derailleurs, Sram feeds them with much smaller button cells that intercede less with the design of the shift controls.

However, this solution has some limitations. The problem associated with interchangeable power supplies being mounted only on the components with the highest energy consumption is that they will all discharge at a similar rate, so that by the time one of them needs to be exchanged, the others will be also at very low charge levels, so that, after interchanging them, such battery will not offer much range to the receiving component, while the discharged battery will not have enough energy to keep the donor component running. So in practice, the usefulness of interchangeable batteries is very limited in solutions like Sram 's, and it is only used in an emergency case, such as when the rear derailleur discharges before the front derailleur; in such case the front chainring is first placed in the desired position to be able to reach the destination, and then the battery is interchanged with the rear derailleur in order to continue using the electronic gear shifting system in a partial mode (by only shifting rear gears while the front gear is kept unchanged), not ideal, just to be able to reach the destination.

### DESCRIPTION OF THE INVENTION

In order to provide a solution to the shortcomings of the state of the art, the present invention proposes a derailleur groupset comprising a rear derailleur unit and a shift control unit, at least a first power supply and a second power supply, being the power supplies equal and interchangeable, a first power supply being removably mounted on the rear derailleur unit, characterized in that the second power supply is removably mounted on the shift control unit.

The novelty of including two identical and interchangeable power supplies in components of the electronic gear shifting system for bicycles with very different power consumption is that the interchangeability function of the power supplies is greatly improved. By the time most of the energy from the rear derailleur unit power supply is consumed, only a small portion of the power from the shift control unit power supply will have been consumed, so when interchanging the power supplies, the almost fully charged power supply will maintain the rear derailleur unit in normal use still for a long period of time, while the almost discharged battery will also be enough to power the shift control unit thus offering the bicycle user a better use of the energy available in the bicycle, in order to extend its use without the need for additional recharging and without reducing the functional performance of the system.

In some embodiments the shift control unit comprises two shift controls. In this case, each of the shift controls can include its own power supply interchangeable with each other, and with the rear derailleur for even greater range, or the shift control unit can contain a single power supply that powers both shift controls, which will be connected by a wiring cable. With this wiring of the shift controls, redundant elements are reduced in the shift control unit, reducing complexity, cost and price, without preventing interchangeability with the rear derailleur for better use of the bicycle's energy.

Locating a power supply with enough capacity to feed the rear derailleur inside the shift controls can be difficult, due to its volume, without affecting the ergonomics and grip of the shift controls. For this reason, in some embodiments the shift control unit comprises a housing for the power supply connected by a wiring cable to the shift controls, configured to be mounted on one of the ends of a bicycle handlebar and that can removably house one of the power supplies. In this manner, by leaving the power supply of the shift control unit outside the shift controls, more space is freed up for the brake system and other elements, so that the shift controls can be made more compact, ergonomic, and aesthetic. And by locating the power supply -and its housing- at the end of the handlebar, it becomes very accessible when swapping it with the derailleur power supply.

For the same reason of freeing up space in the controls to improve ergonomics and aesthetics, in some embodiments the central control unit containing the main electronics of the shift control unit can be placed in the power supply housing. In other embodiments, and for the same purpose, the central control unit is configured to be mounted on the second end of the handlebar, being connected by a wiring cable to the shift controls and to the power supply housing. In this last configuration, the central control unit is itself an independent unit with easy access that facilitates its assembly and disassembly in case of breakdowns, improvements or adjustments.

In some embodiments in which the central control unit is located at the second end of the handlebar, the wiring cable connects the power supply housing and the central control unit from inside the handlebar so that the cable is not visible from the outside, and other wiring cables in the outside of the handlebar connect one of the shift controls with the power supply housing and also another of the shift controls with the central control unit. Then by taping the handlebars over the cables, a setup with no visible cables can be achieved. In this manner, an aesthetically pleasing assembly is achieved without any visible cables for any handlebar on the market, without the need for the handlebar to have specific holes to hide the cables.

In some embodiments, the power supply removably mounted on the shift control unit includes connections to other functional units mounted on the handlebar that are complementary to the electronic gear shifting system for bicycles (cyclocomputer, lights, smartphone, heated grips, etc.). In this manner, with a single power supply, all the devices that are located on the handlebar can be powered. Also, this power supply comes with a high energy capacity, because it must be compatible with the energy requirements of the derailleur. In this manner it is not necessary to monitor and recharge each one of the batteries of the handlebar devices, but only one power supply needs to be monitored.

In some embodiments the derailleur assembly comprises a third power supply, equal to and interchangeable with the first and second power supplies, and adapted to be removably mounted on a chainring shifting unit for bicycles. Thus, all the components of the electronic gear shifting system can use equivalent power supplies, thereby increasing the usefulness of interchanging power supplies and enhancing the energy use of the power supplies arranged on the bicycle.

In some of the embodiments that consider a chainring shifting unit, the third power supply is configured to be removably mounted in the bottom bracket of a bicycle. And in some of these embodiments, the power supply intended to be removably mounted on the chainring shifting unit comprises connections to other functional units mounted on the cranks that are complementary to the electronic gearshifting system (cadence sensors, powermeters, ...) in order to reduce the total number of batteries and facilitate their management and recharging.

In some embodiments a fourth power supply, equal to and interchangeable with the first, second and third power supplies, is removably mounted on other functional units complementary to the electronic gear shifting system for bicycles (front and rear lights, cyclocomputer, etc.). display, cameras, cadence sensor, power sensor, telescopic seatposts, suspensions, ...). In this manner, there are more interchangeable power supplies to enhance the energy use of the power supplies arranged on the bicycle.

In some embodiments, the powersupplies are cylindrical in shape to be compatible with most electrical devices on the bicycle. The cylindrical shape is especially suitable for locating the power supply in cylindrical cavities of the bicycle, such as the inside of the handlebar or the bottom bracket.

In order to achieve the maximum energy use of the power supplies arranged on the bicycle, in some embodiments, the derailleur groupset includes software for managing the interchange and recharging of the power supplies, monitoring the charge level of all the power supplies arranged on the bicycle and deciding on a battery interchange strategy to be able to extend the use of the bicycle without the need for additional recharging and without reducing functional performance, while at the same time managing in an orderly manner the right timing for recharging the power supplies, so that this task of recharging the batteries is the least annoying for the user.

### BRIEF DESCRIPTION OF THE DRAWINGS

To complement the description and in order to help a better understanding of the characteristics of the invention, according to an example of a practical embodiment, a set of figures is attached as an integral part of the description, in which with illustrative and non-limiting purpose, the following has been represented:
Figure 1 schematically shows a bicycle in which a first embodiment of the derailleur groupset can be seen.
Figure 2 shows a rear derailleur with a removable power supply.
Figure 3 shows a first embodiment of a shift control unit with a removable power supply.
Figure 4 shows a second embodiment of a shift control unit with a removable power supply.
Figure 5 schematically shows a bicycle in which an alternative embodiment of the derailleur groupset can be seen.
Figure 6 shows a third embodiment of a shift control unit with a removable power supply.
Figure 7 shows a chainring shifting unit with a removable power supply.
Figure 8 shows a fourth embodiment of a shift control unit with a removable power supply.
Fig. 9 shows the fourth embodiment of a shift control unit mounted on a bicycle handlebar.

### DESCRIPTION OF PREFERRED EMBODIMENTS OF THE INVENTION

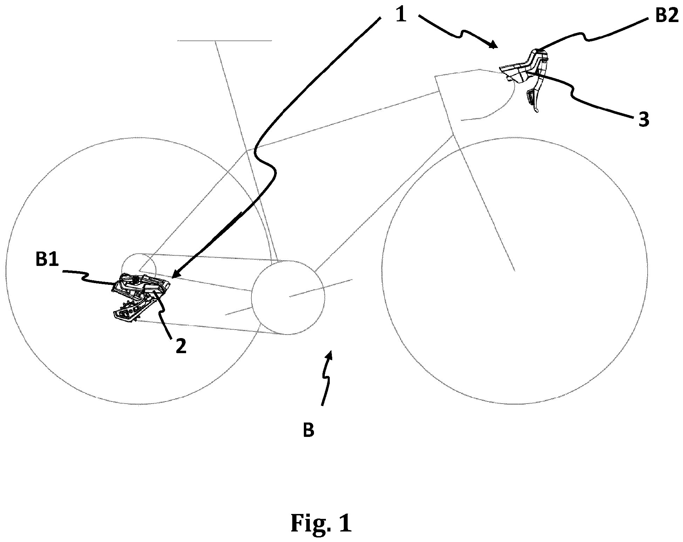

Figures 1, 2 and 3 show a bicycle B comprising a first preferred embodiment of a derailleur groupset 1 comprising:
a rear derailleur unit 2 and a shift control unit 3, at least a first power supply B1 and a second power supply B2, the power supplies B1, B2 being equal and interchangeable, a first power supply B1 being removably mounted in the rear derailleur unit 2, characterized in that the second power supply B2 is removably mounted in the shift control unit 3.

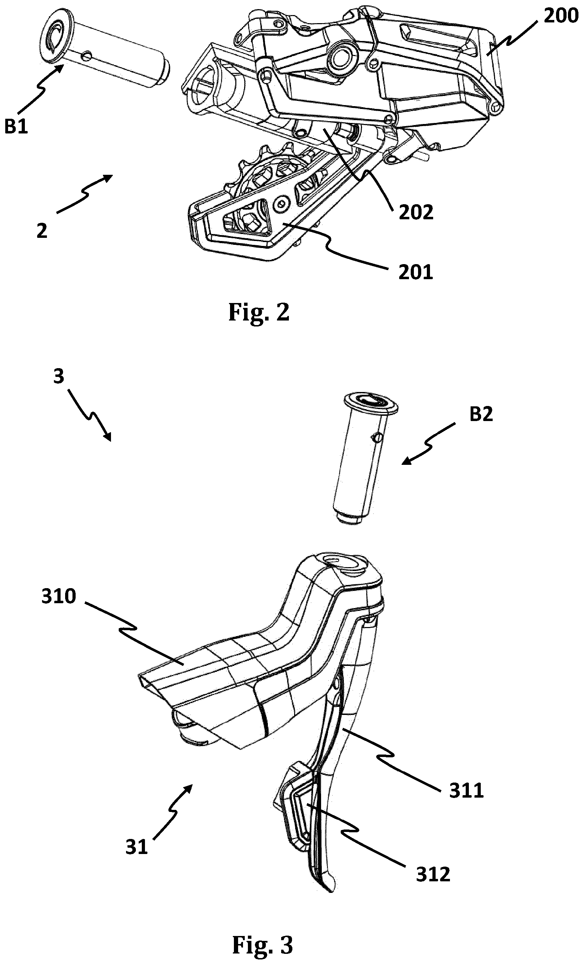

As it can be seen in figure 3, in this first embodiment, the shift control unit 3 is made up of a single shift control 31 on which the second power supply B2 is removably mounted. The shift control 31 is composed of a support part 310, a brake lever 311, and a shift button 312 arranged on the brake lever 311 to control the rear derailleur based on different pressing modes. It is observed that the support part 310 contains a housing substantially parallel to the brake lever 311 in its rest position, where the power supply B2 is removably mounted.

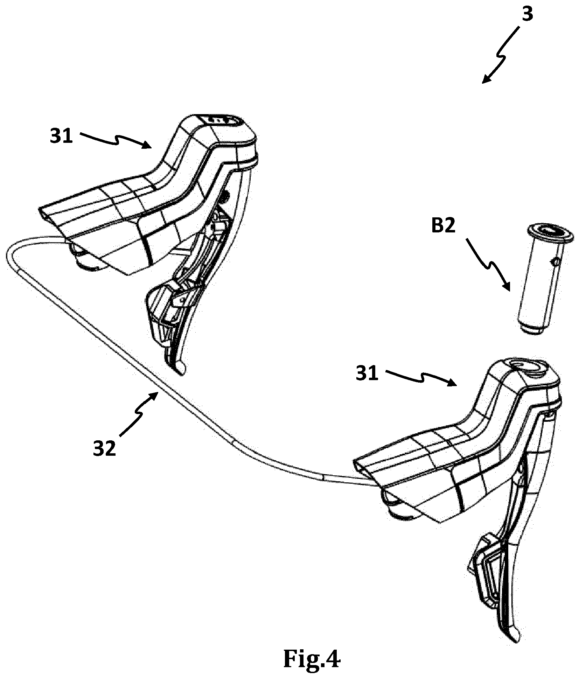

In another embodiment, the shift control unit 3 comprises two shift controls 31 to govern the rear derailleur more efficiently; button on the left shift control to shift sprockets upwards and button on the right shift control to shift sprockets downwards, for example. They can be two shift controls each with their power supply removably mounted, or they can share the same power supply if both controls are connected by a wiring cable 32, as illustrated in figure 4, and thus reduce complexity, weight, possible breakdowns and cost. The disadvantage of this embodiment would be that a cable would be exposed outside the handlebar between the shift controls, or that it would be necessary to drill holes in the handlebar in order to be able to pass the cables inside the handlebar (unless the cables are passed from side to side through the ends of the handlebar).

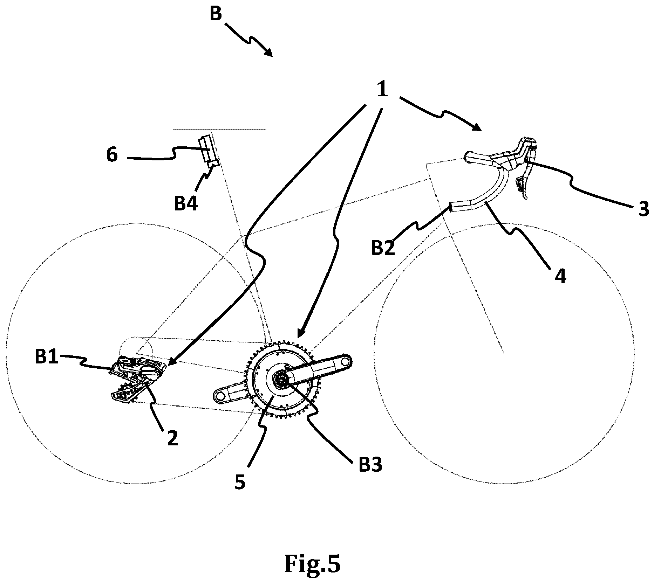

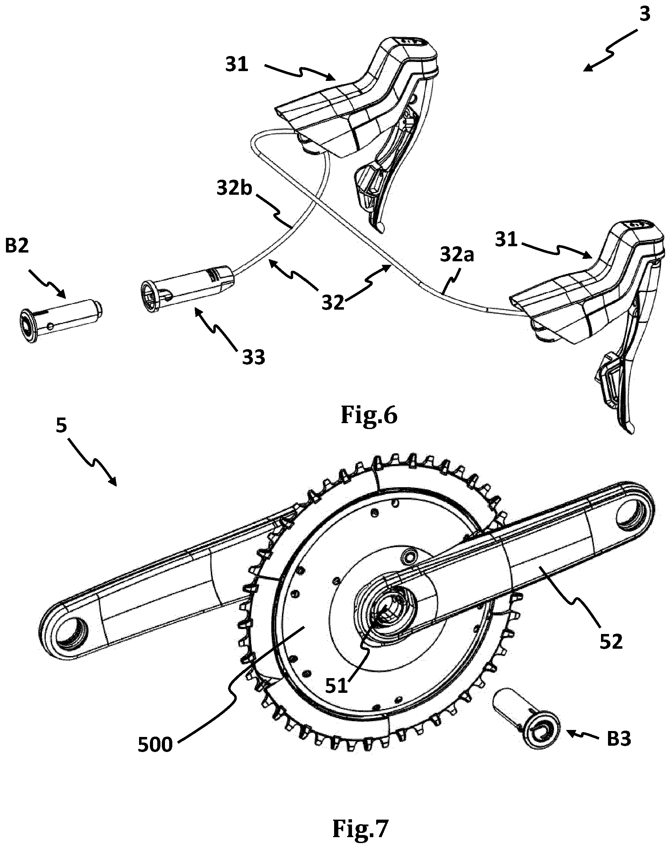

Figures 5, 6 and 7 show a bicycle B comprising another preferred embodiment in which the derailleur groupset according to any of the preceding claims, comprising a third power supply B3, equal to and interchangeable with the first B1 and second B2 power supplies, and intended to be removably mounted on a chainring shifting unit 5 of a bicycle B. Figure 7 shows that the third power supply B3 is configured to be removably mounted on the bottom bracket 51 of a bicycle B. This embodiment also comprises a fourth power supply B4, equal and interchangeable with the first B1, second B2 and third B3 power supplies, removably mounted on other functional units complementary to the electronic gear shifting system of bicycle B, specifically in Figure 5, it is observed that the fourth power supply B4 is removably mounted on a rear light unit 6 of bicycle B. In this embodiment, as well as in the others represented, the power supplies B1, B2, B3, B4 have a cylindrical shape, for a better use of the cylindrical spaces such as those at the ends of the handlebar 4 or bottom bracket 51, but in other embodiments not illustrated the power supplies B1, B2, B3, B4 could have different volumetric shapes.

This embodiment with four equal and interchangeable power sources B1, B2, B3, B4 maximizes the use of energy in the bicycle in order to extend its use without the need for additional recharging and without reducing the functional performance of the system. For this management, the realization of figures 5, 6 and 7 would have a management software for the interchange and recharging of the power supplies, monitoring the charge level of all the power supplies arranged on the bicycle and deciding a battery interchange strategy to be able to extend the use of the bicycle without the need for additional recharging and without reducing functional performance, while at the same time managing in an orderly manner the right timing for recharging the power supplies, so that this task of recharging the batteries is the least annoying for the user.

To make it easier for the user to manage the batteries of bicycle B, in the embodiment of figures 5, 6 and 7, the rest of the electronic devices of the bicycle are powered by power supplies B1, B2 and B3 of the electronic gear shifting system of the bicycle B. In this embodiment, the power supply (B2) removably mounted on the shift control unit 3 comprises connections to other functional units mounted on the handlebar 4 complementary to the electronic gear shifting system of bicycle B, such as a headlight (not shown in the figures) or a cyclocomputer (not shown in the figures), and the power supply B3 intended to be removably mounted on the chainring shifting unit 5 comprises connections to be connected to other functional units mounted on the cranks 52 complementary to the electronic gear shifting system of bicycle B, such as a powermeter (not illustrated in the f figures). In this manner, with the orderly management of only the power sources B1, B2, B3 and B4, an orderly management of all the energy needs of the bicycle can be carried out, reducing and facilitating the maintenance of current bicycles that are full of electronic elements (cyclocomputers, lights, electronic shifters, powermeters, cameras and various sensors) and batteries, whose management for maintaining always enough charge is becoming more of a problem.

Regarding the shift control unit 3, as illustrated in figure 6, this embodiment comprises a housing for the power supply 33 connected by a wiring cable 32 to the shift controls 31, configured to be mounted on one of the ends of a bicycle B handlebar 4 and which can removably house one of the power supplies B1, B2. In this way, space and restrictions are freed from the shift controls 31, so that more ergonomic and aesthetic shapes of the shift controls 31 can be achieved, while the power supply B2 is moved to a more accessible area that facilitates its interchange other bike power supplies B1, B3, B4. However, in order to do this it is necessary to complicate the wiring cable 32, requiring a first part of the cable 32a that connects both shift controls 31, and a second part of the cable 32b that connects the housing of the power supply 33 with one of the shift controls 31.

With the same objective of freeing up space and restrictions on the shift controls, in some embodiments the power supply housing 33 incorporates the central control unit 34.

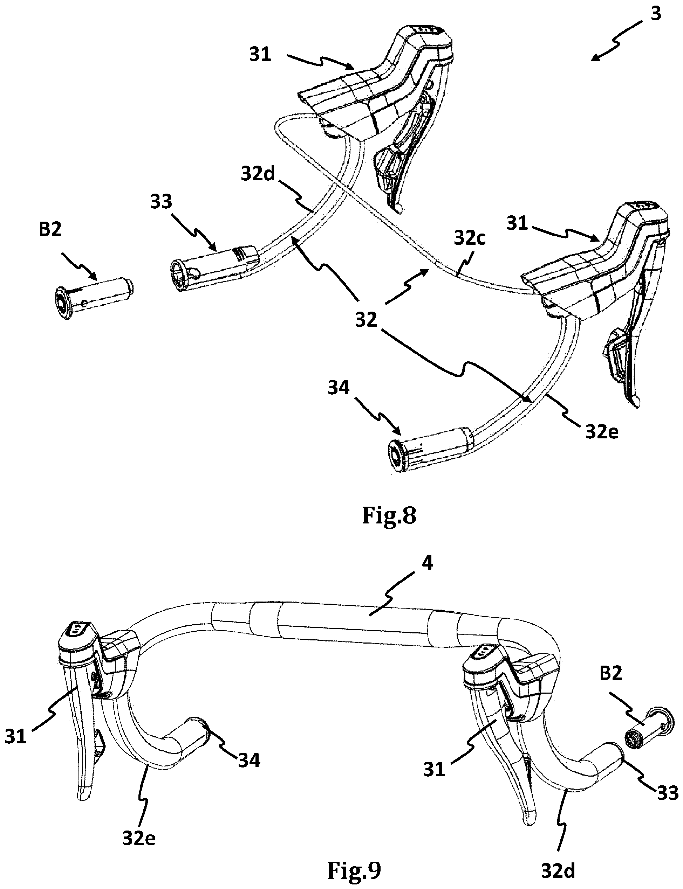

In other embodiments, such as the one illustrated in Figures 8 and 9, the shift control unit 3 comprises a central control unit 34 connected by a wiring cable 32 to the shift controls 31 and to the power supply housing 33, configured to be mounted on the second end of the handlebar 4. In this manner, in addition to freeing up space and restrictions for the ergonomics and aesthetics of the shift controls 31, the central control unit 34 is located in a more accessible area that facilitates its adjustment, repairs or replacement.

In this last embodiment, the wiring cable 32 connects the housing of the power supply 33 and the central control unit 34 through the inside of the handlebar 4 by means of a central part of the cable 32c, and connects one of the shift controls 31 to the housing of the power supply 33 from the outside of the handlebar 4 by means of a first end part of the cable 32d, and connects another of the shift controls 31 with the central control unit 34 by means of a second end part of the cable 32e, as illustrated in figures 8 and 9. This way of wiring the elements of the shift control unit 3, makes the shift control unit compatible, without the need for any modification, with all tubular handlebars that have a continuous hole between both ends, that is, with the vast majority of handlebars available in the market, which is a great advantage.

In this text, the word "comprise" and its variants (such as "comprising", etc.) should not be interpreted in an exclusive way, that is, they do not exclude the possibility that what is described includes other elements, steps, etc.

On the other hand, the invention is not limited to the specific embodiments that have been described but also covers, for example, the variants that can be carried out by the person skilled in the art (for example, in terms of the choice of materials, dimensions, components, configuration, etc.), within what follows from the claims.

## Claims

1. - Derailleur groupset (1) comprising a rear derailleur unit (2) and a shift control unit (3), at least a first power supply (B1) and a second power supply (B2), both power supplies being equal and interchangeable (B1, B2), a first power supply (B1) being removably mounted on the rear derailleur unit (2), **characterized in that** the second power supply (B2) is removably mounted on the shift control unit (3).

2. Derailleur groupset according to claim 1, in which the shift control unit (3) comprises two shift controls (31) connected by a wiring cable (32).

3. Derailleur groupset according to claim 2, in which the shift control unit (3) comprises a housing for the power supply (33) connected by a wiring cable (32) to the shift controls (31), configured to be mounted on one of the ends of a bicycle (B) handlebar (4) and which can removably house one of the power supplies (B1, B2).

4. Derailleur groupset according to claim 3, in which the shift control unit (3) comprises a central control unit (34) connected by a wiring cable (32) to the shift controls (31) and to the power supply housing (33) , configured to be mounted on the second end of the handlebar (4).

5. Derailleur groupset according to claim 3, in which the power supply housing (33) incorporates the central control unit (34).

6. Derailleur groupset according to claim 4, in which the wiring cable (32) connects the housing of the power supply (33) and the central control unit (34) inside the handlebar (4), and connects from the outside of the handlebar (4) one of the shift controls (31) with the power supply housing (33) and another of the shift controls (31) with the central control unit (34).

7. Derailleur groupset according to any of the preceding claims, in which the power supply (B2) removably mounted on the shift control unit (3) comprises connections to other functional units mounted on the handlebar (4) complementary to the electronic gear shifting system of the bicycle (B).

8. Derailleur groupset according to any of the preceding claims, comprising a third power supply (B3), equal to and interchangeable with the first (B1) and second (B2) power supplies, and intended to be removably mounted in a chainring shifting unit (5) of a bicycle (B).

9. Derailleur groupset according to claim 8 in which the third power supply (B3) is configured to be removably mounted on the bottom bracket (51) of a bicycle (B).

10. Derailleur groupset according to claim 9, in which the power supply (B3) intended to be removably mounted on the chainring shifting unit (5) comprises connections to be connected to other functional units mounted on the cranks (52) complementary to the electronic gear shifting system of the bicycle (B).

11. Derailleur groupset according to claim 8 and any claim depending on it, comprising a fourth power supply (B4), equal and interchangeable with the first (B1), second (B2) and third (B3) power supplies, removably mounted on other functional units complementary to the electronic gear shifting system of the bicycle (B).

12. Derailleur groupset according to any of the preceding claims, in which the power supplies (B1, B2, B3, B4) have a cylindrical shape.

13. Derailleur groupset according to any of the preceding claims, comprising management software for the interchange and recharging of the power supplies (B1, B2, B3, B4).

14. - Bicycle (B) comprising a derailleur groupset (1) according to any of the preceding claims.
